Europäisches Patentamt

European Patent Office

Office européen des brevets

(11) Numéro de publication: **0 274 938 B1**

# FASCICULE DE BREVET EUROPEEN

(45) Date de publication de fascicule du brevet:
08.05.91

(51) Int. Cl.5: **B29C 59/12**, //B29K67/00

(21) Numéro de dépôt: 87402806.1

(22) Date de dépôt: 10.12.87

(54) Procédé pour augmenter la mouillabilité de polymères.

(30) Priorité: 12.12.86 FR 8617432

(43) Date de publication de la demande:
20.07.88 Bulletin 88/29

(45) Mention de la délivrance du brevet:
08.05.91 Bulletin 91/19

(84) Etats contractants désignés:
AT BE CH DE FR GB LI NL

(56) Documents cités:
EP-A- 0 127 149     DE-A- 3 408 837
FR-A- 1 365 106     GB-A- 2 172 819
US-A- 3 274 089     US-A- 3 391 070

INTERNATIONAL POLYMER SCIENCE AND
TECHNOLOGY, vol. 11, no. 3, 1984, pages
T/66-T/74, Shawbury, Schrewbury, GB; B.L.
GORBERG et al.: "Use of low-temperature
plasma for treatment of polymeric materials
used in 'light industry' and in the textile
industry"

PATENT ABSTRACTS OF JAPAN, vol. 5, no.
168 (C-77)[840], 27 octobre 1981; & JP-A-56
98 469 (TOKYO SHIBAURA DENKI K.K.)
07-08-1981

(73) Titulaire: ELECTRICITE DE FRANCE Service
National
2, rue Louis Murat
F-75008 Paris(FR)

(72) Inventeur: Millet, Jacques
23 rue des Plantes
F-75014 Paris(FR)
Inventeur: Amouroux, Jacques
13 boulevard de Villeziers
F-91440 Bures S/Yvette(FR)
Inventeur: Mournet, Sylvie
71 avenue d'Italie
F-75013 Paris(FR)
Inventeur: Goldman, Max
5 Chemin des Buttes
F-91190 Gif S/Yvette(FR)

(74) Mandataire: Le Guen, Gérard et al
CABINET LAVOIX 2, place d'Estienne d'Orves
F-75441 Paris Cédex 09(FR)

**Description**

La présente invention concerne un procédé pour augmenter la mouillabilité d'un article en un matériau polymère.

Il est connu de diminuer la mouillabilité d'articles en matériaux polymères par traitement de la surface de ces articles par un plasma de gaz fluorés tels que $C_2H_2F_2$, $C_2F_4$, $C_3F_6$, $CF_3H$ et $CF_4$ ("Effects of Glow Discharge on Fibers and Fabrics" T. YASUDA; M. GAZICKI; H. YASUDA. J. Appl. Polym. Sc. : Appl. Polym. Symp. 38, 201-214, (1984))

Lors d'une étude du traitement de matériaux polymères par plasmas gazeux fluorés obtenus par décharge couronne à la pression atmosphérique, les inventeurs ont eu la surprise de constater que pour certains polymères et avec certains mélanges gazeux fluorés on obtenait non pas une diminution de la mouillabilité mais une augmentation.

Plus particulièrement les inventeurs ont constaté que le traitement par la méthode dite par décharge couronne d'un article en un matériau polymère comprenant essentiellement un polyester ou contenant de 1 à 10% d'un additif de type ester dans un mélange gazeux comprenant un gaz fluocarboné saturé et un gaz rare conduisait à une augmentation de la mouillabilité.

La présente invention est basée sur cette découverte.

Ainsi la présente invention a pour objet un procédé pour augmenter la mouillabilité d'un article en matériau polymère par un traitement de surface par la méthode dite par décharge couronne, caractérisé en ce que le polymère comprend essentiellement un polyester ou contient de 1 à 10% en poids d'un additif de type ester et on effectue la décharge dans un mélange gazeux comprenant un gaz fluorocarboné saturé et un gaz rare, et ayant un rapport volumique gaz fluorocarboné/gaz rare inférieur à 1, à une pression de $0,5 \cdot 10^5$ à $1,5 \cdot 10^5$ Pa.

En pratique le procédé selon l'invention peut être mis en oeuvre dans une enceinte comprenant un dispositif à décharge couronne et initialement remplie de gaz rare, dans laquelle on fait passer en continu le mélange gazeux comprenant le gaz fluorocarboné saturé et le gaz rare.

On ajuste alors les débits de gaz de façon que le débit de gaz fluorocarboné saturé soit inférieur au débit de gaz rare.

Le rapport volumique gaz fluorocarboné/gaz rare et le rapport des débits gaz fluorocarboné/gaz rare sont avantageusement de 0,01 à 0,5.

Le procédé selon l'invention présente l'avantage de pouvoir être mis en oeuvre à la pression atmosphérique.

La décharge couronne peut être effectuée à une fréquence de 60 à 80 kHz et une tension de 2 à 10 kV. On obtient des impulsions de 1 à 10 MHz.

Le procédé selon l'invention peut être appliqué notamment à des feuilles et en particulier à des feuilles minces (ayant une épaisseur de 2 micromètres à 300 micromètres).

A cet effet la feuille peut être placée sur une électrode support, notamment une électrode support cylindrique, en vis-à-vis d'au moins une électrode fil ou couteau avec une distance entre électrodes inférieure à 5 mm.

Le temps de traitement peut être de $10^{-3}$ à 1 seconde.

Le matériau polymère peut être constitué par un polyester, notamment un polyester saturé tel que le polytéréphtalate d'éthylène ou le polytéréphtalate de butylène.

Le matériau polymère peut aussi être constitué d'un polymère ou un copolymère dépourvu de groupes esters dans sa structure, par exemple du polyéthylène, du polypropylène, mais contenant de 1 à 10% en poids d'un additif de type ester, notamment un additif de type ester aromatique, c'est-à-dire un composé comprenant au moins un groupe ester fixé sur un noyau aromatique. Ces additifs sont notamment des additifs classiques des polymères tels que des plastifiants, des antioxydants, des anti UV contenant dans leur molécule au moins un groupe ester.

Le gaz fluorocarboné saturé peut être notamment le tétrafluorométhane. Mais d'autres gaz fluorocarbonés saturés peuvent être utilisés, tels que par exemple le trifluorométhane ($CF_3H$), l'hexafluoréthane ($C_2F_6$) ou d'autres composés perfluorés saturés.

Le gaz rare peut être l'argon, l'hélium, le néon, le krypton ou le xénon.

Le procédé selon la présente invention peut être utilisé notamment pour fabriquer des pellicules de matériau polymère sur lesquelles on forme des films d'eau de faible épaisseur et uniformes, ces pellicules étant utilisables en agriculture et plus spécialement dans la réalisation de serres, en raison des propriétés de mouillabilité. En particulier il est possible, grâce au procédé selon l'invention d'éviter dans les serres le vieillissement des feuilles de matériau polymère par concentration des rayons du soleil par les gouttes d'eau.

Le procédé peut être en outre utilisé pour fabriquer des pellicules composites multicouches en raison des propriétés d'autoadhérence.

Les inventeurs ont en outre constaté que la mouillabilité et tout spécialement l'aptitude à la formation d'une couche uniforme d'eau à la surface des polymères pouvait être accrue si l'on opérait en présence de 0,1 à 5% d'oxygène en volume.

Sans vouloir se lier par une théorie quelconque on pense que le traitement par le gaz fluorocarboné saturé en présence de gaz rare conduit à la formation de groupes polaires CF et qu'en présence d'oxygène il se forme également des groupes CO qui augmentent encore la mouillabilité.

Les exemples suivants illustrent la présente invention.

Dans ces exemples on a utilisé une enceinte étanche dans laquelle on fait passer en continu un mélange d'argon et de tétrafluorométhane à une pression de $10^5$ Pa. Initialement l'enceinte est remplie d'argon.

Dans cette enceinte est disposée un dispositif à décharge couronne comprenant un cylindre sur lequel est fixée la feuille de matériau polymère à traiter et un fil électrode à une distance de 1 mm du cylindre. La fréquence du générateur est de 70 kHZ. La vitesse de rotation du cylindre est de 60 t/minute et le temps de traitement de chaque feuille est de 0,72 seconde.

Exemple 1

On traite par décharge couronne une feuille de polyéthylène ayant une épaisseur de 75 micromètres et contenant environ 3% en poids de phtalate de di-2 éthylhexyle.

On utilise un débit d'argon de 8,5 l/h et un débit de $CF_4$ de 0,15 l/h. On opère avec une tension de 2,5 kV.

L'angle de mouillage par l'eau est avant traitement de 98°. Après traitement il est de 52°.

On observe en outre une attraction de l'eau sur la feuille. Par rinçage au jet on obtient une couche d'eau uniforme.

L'analyse par ESCA (spectroscopie électronique pour l'analyse chimique) confirme la fixation de fluor.

Le spectre IR confirme également la présence de liaisons C-F.

Exemple comparatif 1

On opère comme à l'exemple 1 mais avec une feuille de polyéthylène dit "pur" ayant une épaisseur de 90 micromètres et contenant seulement 0,3% en poids d'additif (contenant un groupement phénol, un groupement cétone et un groupement éther).

L'angle de mouillage par l'eau est avant traitement de 72° et après traitement de 94°. On n'observe pas d'attraction de l'eau.

Il ne se forme pas de couche d'eau uniforme par rinçage au jet.

Exemple comparatif 2

On opère à l'exemple 1 avec une feuille de polypropylène sans additif ayant une épaisseur de 250 micromètres.

L'angle de mouillage est de 92° avant traitement. Après traitement il est abaissé à 80° mais on n'observe pas d'attraction de l'eau ni la formation d'une couche d'eau uniforme par rinçage au jet.

Exemple 2

On opère comme à l'exemple 1 mais en utilisant une feuille de polytéréphtalate d'éthylène ayant une épaisseur de 75 micromètres.

L'angle de mouillage à l'eau est de 60° avant traitement. Après traitement il est seulement de 28°. On observe en outre une attraction de l'eau et la formation d'une couche d'eau uniforme par rinçage au jet.

Exemple 3

On opère comme à l'exemple 1 mais avec un débit de $CF_4$ de 2 l/h.

On obtient un angle de mouillage par l'eau après traitement de 57°.

Un taux de $CF_4$ plus élevé conduit donc à une augmentation plus faible de la mouillabilité.

Exemple comparatif 3

On opéré comme à l'exemple 1 mais avec un débit d'argon de 5 l/h et un débit de $CF_4$ de 5 l/h. On n'observe plus d'augmentation de la mouillabilité.

Exemple 4

On a opère comme à l'exemple 1 avec différents débits et/ou tension.

On a mesuré par ESCA le rapport F/C.

On a en outre effectué un test d'autoadhésion et on a mesuré la force nécessaire pour séparer deux pellicules de polyéthylène contenant 3% en poids de phtalate de di-2-éthylhexyle cm pressé sous $3.10^6$ Pa à 80°C pendant 3 minutes (échantillons de 2 cm de large).

Les résultats sont donnés dans le tableau suivant

| Conditions opératoires | ESCA F/C | Force de pelage (Newton/ cm²) |
|---|---|---|
| Témoin | – | 0.1 |
| d(Ar)=8,5 l/h<br>d($CF_4$)=0,15 l/h<br>V=2,5 kV | 0,128 | 3 |
| d(Ar)=4,2 l/h<br>d($CF_4$)=1 l/h<br>V=3,0 kV | 0,154 | 1 |
| d(Ar)=8,5 l/h<br>d($CF_4$)=2 l/h<br>V=2,5 kV | 0,588 | 0.1 |

Ces résultats mettent en évidence qu'une faible fixation de fluor augmente notablement l'autoadhérence des pellicules. Cette observation est corrélée avec la modification de la mouillabilité des pellicules notamment après lavage.

Exemple 5

On opère comme à l'exemple 2 mais en ajoutant 1% en volume d'oxygène.

On obtient une feuille de polytéréphtalate d'éthylène qui se mouille complètement à l'eau en donnant une couche d'eau uniforme. Le poids de la couche d'eau est de 20 mg/cm².

EP 0 274 938 B1

**Revendications**

1. Procédé pour augmenter la mouillabilité d'un article en un matériau polymère par un traitement de surface par la méthode dite par décharge couronne, caractérisé en ce que le polymère comprend essentiellement un polyester ou contient de 1 à 10% en poids d'un additif de type ester et on effectue la décharge dans un mélange gazeux comprenant un gaz fluorocarboné saturé et un gaz rare, et ayant un rapport volumique gaz fluorocarboné/gaz rare inférieure à 1, à une pression de $0,5.10^5$ à $1,5.10^5$ Pa.

2. Procédé selon la revendication 1, caractérisé en ce que l'on effectue le décharge couronne à la pression atmosphérique.

3. Procédé selon la revendication 1 ou la revendication 2, caractérisé en ce que la décharge couronne est effectuée à une fréquence de 60-80 kH et une tension de 2 à 10 kV.

4. Procédé selon l'une quelconque des revendications 1 à 3, caractérisé en ce que l'article est sous forme d'une feuille.

5. Procédé selon la revendication 4, caractérisé en ce que la feuille est placée sur une électrode support en vis-à-vis d'au moins une électrode fil ou couteau avec une distance entre électrodes inférieure à 5 mm.

6. Procédé selon l'une quelconque des revendications 1 à 5, caractérisé en ce que le temps de traitement est de $10^{-3}$ à 1 seconde.

7. Procédé selon l'une quelconque des revendications 1 à 6, caractérisé en ce que le polymère contient un additif de type ester aromatique.

8. Procédé selon l'une quelconque des revendications 1 à 7, caractérisé en ce que le polymère est du polytéréphtalate d'éthylène.

9. Procédé selon l'une quelconque des revendications 1 à 8, caractérisé en ce que le gaz fluorocarboné est du tétrafluorométhane.

10. Procédé selon l'une quelconque des revendications 1 à 9, caractérisé en ce que l'on opère en présence de 0,1 à 5% d'oxygène en volume.

11. Procédé selon l'une quelconque des revendications 1 à 8, caractérisé en ce que le gaz fluorocarboné est choisi parmi le trifluorométhane, l'hexafluoroéthane et les composés perfluorés saturés.

**Claims**

1. Process for increasing the wettability of an article made of a polymeric material by a surface treatment using the so-called corona discharge method, characterised in that the polymer comprises essentially a polyester or contains from 1 to 10% by weight of an additive of ester type and the discharge is produced in a gaseous mixture comprising a saturated fluorocarbon gas and a rare gas and having a fluorocarbon gas/rare gas volume ratio lower than 1, at a pressure of $0.5 \times 10^5$ to $1.5 \times 10^5$ Pa.

2. Process according to Claim 1, characterised in that the corona discharge is produced at atmospheric pressure.

3. Process according to Claim 1 or Claim 2, characterised in that the corona discharge is produced at a frequency of 60 - 80 kH and a voltage of 2 to 10 kV.

4. Process according to any one of Claims 1 to 3, characterised in that the article is in the form of a sheet.

5. Process according to Claim 4, characterised in that the sheet is placed on a support electrode facing at least one wire or knife electrode with an interelectrode distance of less than 5mm.

5

6. Process according to any one of Claims 1 to 5, characterised in that the treatment time is from $10^{-3}$ to 1 second.

7. Process according to any one of Claims 1 to 6, characterised in that the polymer contains an additive of aromatic ester type.

8. Process according to any one of Claims 1 to 7, characterised in that the polymer is polyethylene terephthalate.

9. Process according to any one of Claims 1 to 8, characterised in that the fluorocarbon gas is tetrafluoromethane.

10. Process according to any one of Claims 1 to 9, characterised in that it is operated in the presence of 0.1 to 5% of oxygen by volume.

11. Process according to any one of Claims 1 to 8, characterised in that the fluorocarbon gas is chosen from trifluoromethane, hexafluoroethane and saturated perfluoro compounds.

## Ansprüche

1. Verfahren zur Erhöhung der Benetzbarkeit von Gegenständen aus einem Polymermaterial durch Oberflächenbehandlung nach dem sog. Koronaentladungsverfahren,

   **dadurch gekennzeichnet,** daß

   - das Polymer im wesentlichen aus einem Polyester besteht oder 1 bis 10 Gew.-% eines Additivs vom Estertyp enthält

     und

   - die Entladung bei einem Druck von $0,5.10^5$ bis $1,5.10^5$ Pa in einem Gasgemisch durchgeführt wird, das eine gasförmige gesättigte Fluorkohlenstoffverbindung und ein Edelgas enthält, wobei das Volumenverhältnis von gasförmiger Fluorkohlenstoffverbindung zu Edelgas kleiner als 1 ist.

2. Verfahren nach Anspruch 1, dadurch gekennzeichnet, daß die Koronaentladung bei Atmosphärendruck durchgeführt wird.

3. Verfahren nach Anspruch 1 oder 2, dadurch gekennzeichnet, daß die Koronaentladung bei einer Frequenz von 60 bis 80 kHz und einer Spannung von 2 bis 10 kV durchgeführt wird.

4. Verfahren nach einem der Ansprüche 1 bis 3, dadurch gekennzeichnet, daß der behandelte Gegenstand in Folienform vorliegt.

5. Verfahren nach Anspruch 4, dadurch gekennzeichnet, daß die Folie auf einer Trägerelektrode gegenüber mindestens einer draht - oder messerförmigen Elektrode angeordnet wird, wobei der Abstand zwischen den Elektroden kleiner als 5 mm ist.

6. Verfahren nach einem der Ansprüche 1 bis 5, dadurch gekennzeichnet, daß die Behandlungsdauer $10^{-3}$ bis 1 s beträgt.

7. Verfahren nach einem der Ansprüche 1 bis 6, dadurch gekennzeichnet, daß das Polymer ein Additiv vom Typ eines aromatischen Esters enthält.

8. Verfahren nach einem der Ansprüche 1 bis 7, dadurch gekennzeichnet, daß das Polymer Polyethylenterephthalat ist.

9. Verfahren nach einem der Ansprüche 1 bis 8, dadurch gekennzeichnet, daß die gasförmige Fluorkoh-

6

lenstoffverbindung Tetrafluormethan ist.

10. Verfahren nach einem der Ansprüche 1 bis 9, dadurch gekennzeichnet, daß in Gegenwart von 0,1 bis 5 Vol.-% Sauerstoff gearbeitet wird.

11. Verfahren nach einem der Ansprüche 1 bis 8, dadurch gekennzeichnet, daß die gasförmige Fluorkohlenstoffverbindung unter Trifluormethan, Hexafluorethan und gesättigten perfluorierten Verbindungen ausgewählt ist.